# EUROPEAN PATENT APPLICATION

(11) **EP 3 925 803 A1**
(43) Date of publication of application: **22.12.2021**
(21) Application number: 21167354.6
(22) Date of filing: 08.04.2021
(51) Int. Cl.: B60C 19/00, B60C 19/12

(54) **TIRE COMPRISING A SEALANT LAYER AND AN ACOUSTIC ABSORBENT LAYER**

(30) Priority: 16.06.2020 KR 20200073258
(71) Applicant: HANKOOK TIRE & TECHNOLOGY CO., LTD, Gyeonggi-do 13494 (KR)
(72) Inventor: Noh, Kyu Dong, 34127 Daejeon (KR); Seo, Byeong Ho, 34127 Daejeon (KR); Kim, Jeong Heon, 34090 Daejeon (KR)
(74) Representative: Petraz, Gilberto Luigi

(57) **Abstract**

The present disclosure relates to a tire comprising a sealant layer and an acoustic absorbent layer, and the tire comprises an acoustic absorbent layer positioned inside the tire, a sealant layer positioned between the inner surface of the tire and the acoustic absorbent layer, and applied to the inner surface of the tire, and a film layer positioned between the acoustic absorbent layer and the sealant layer.

The tire may enable a sealant layer applied to the inner surface of the tire to perform a self-sealing process in case of puncture, may have the noise reduction performance by comprising an acoustic absorbent, and not only may prevent micro-fragments of the acoustic absorbent from deteriorating the function of the sealant, but also may maintain the noise reduction performance even when a nail reaches the acoustic absorbent by penetrating the tire and a sealant.

## Description

### BACKGROUND OF THE DISCLOSURE

### Field of the disclosure

The present disclosure relates to a tire comprising a sealant layer and an acoustic absorbent layer and, more particularly, to a tire which is capable of performing a self-sealing process when there is a flat tire, and which has noise reduction performance.

### Related Art

During driving with existing pneumatic tires, a puncture caused by an alien substance on the road surface may cause accidents and even loss of lives by drastically dropping the driving stability. In order to solve these problems, tires that can be continuously used while driving by applying a special sealing material to an inner portion of general tires and allowing the special material on the inner portion of the tires to immediately seal a puncture region although the tires that are punctured during driving, thereby preventing air leakage have been released.

In addition, with strengthening of government regulations and expanding demand for electric vehicles with regard to automobile noise, there is a trend that the demand for reducing noise from tires is gradually increasing. However, recent trends in tire development are that ultrahigh performance (UHP) tires, of which a tire tread part brought into contact with the road surface is formed in a wide width and of which a sidewall corresponding to the tire side surface has a low aspect ratio, have been spotlighted.

As the stiffness of the sidewall is increased due to structural characteristics of the tires so that the tires' own structures fail to perform a role of appropriately damping an impact delivered from the road surface, these tires result in a rise in the negative pressure associated with noise induced. This causes a decrease in the ride quality during driving by generating the vibration of air in the inside (cavity) of the tires, thereby transferring a noise to the inside of a vehicle so that the driver senses the noise (hereinafter, the noise caused by the vibration of the air is collectively referred to as sonorant). Accordingly, tire manufacturers have proposed tires that reduce noise generated inside the tires by using a polyurethane foam (acoustic absorbent) with open cells.

However, self-sealing tires, unlike general tires, contain a polymer material that is applied to an inner portion of the self-sealing tires, so the performance of sealing the puncture region rapidly drops when mounting an acoustic absorbent capable of reducing the internal noise of the tires on the material and an intrinsic self-sealing role cannot be performed.

Furthermore, the acoustic absorbent may be damaged as there is an interference in the combination of the tire and wheel when mounting an acoustic absorbent on the other region, particularly when mounting the acoustic absorbent on a sidewall region. Similarly, the self-sealing tires do not perform their own functions as the noise reduction performance significantly drops even when mounting the acoustic absorbent on the wheel.

### SUMMARY OF THE DISCLOSURE

The present disclosure has been made to solve problems of the conventional art, and an object of the present disclosure is to provide a tire which may enable a sealant layer applied to the inner surface of the tire to perform a self-sealing process in case of puncture, may have the sonorant reduction performance by comprising an acoustic absorbent, and not only may prevent micro-fragments of the acoustic absorbent from deteriorating the function of the sealant, but also may maintain the noise reduction performance even when a nail reaches the acoustic absorbent by penetrating the tire and a sealant.

To achieve the foregoing object, the present disclosure provides a tire comprising an acoustic absorbent layer positioned inside the tire, a sealant layer positioned between the inner surface of the tire and the acoustic absorbent layer, and applied to the inner surface of the tire, and a film layer positioned between the acoustic absorbent layer and the sealant layer, wherein the acoustic absorbent layer comprises a first porous material with an average pore size of 1,200 to 2,400 *µ*m.

The acoustic absorbent layer may further comprise a second porous material stacked on the first porous material, one face of the first porous material may be adhered to the inner surface of the tire by the sealant layer, and the second porous material may be stacked on the other face of the first porous material.

The second porous material may have an average pore size of 100 to 1,200 *µ*m.

The first porous material may have a density of 25 to 40 kg/m³, a hardness of 10 to 20 kgf, a tensile strength of 0.8 kgf/cm² or more, and an elongation of 70% or more, and the second porous material may have a density of 20 to 40 kg/m³, a hardness of 10 to 20 kgf, a tensile strength of 0.8 kgf/cm² or more, and an elongation of 70% or more.

The acoustic absorbent layer may have a thickness of 20 to 60 mm, and the first porous material may have a thickness corresponding to 30 to 90 length% of the total thickness of the acoustic absorbent layer.

The film layer may comprise polyurethane (PU) or thermoplastic polyurethane (TPU), and the film layer may have a thickness of 0.01 to 5 mm.

### ADVANTAGEOUS EFFECTS

A tire according to the present disclosure may enable a sealant layer applied to the inner surface of the tire to perform a self-sealing process in case of puncture, may have the noise reduction performance by comprising an acoustic absorbent, and not only may prevent micro-fragments of the acoustic absorbent from deteriorating the function of the sealant, but also may maintain the noise reduction performance even when a nail reaches the acoustic absorbent by penetrating the tire and a sealant.

### BRIEF DESCRIPTION OF THE DRAWINGS

FIG. 1 is a cut perspective view of a pneumatic tire according to an embodiment of the present disclosure.
FIG. 2 is a cut perspective view of a pneumatic tire according to the other embodiment of the present disclosure.

### DESCRIPTION OF EXEMPLARY EMBODIMENTS

Hereinafter, embodiments of the present disclosure will be described in detail with reference to the accompanying drawings so that the present disclosure can be easily realized by those skilled in the art to which the present disclosure pertains. However, the present disclosure can be implemented in various different forms and is not limited to the embodiments and drawings described herein.

The present disclosure is intended to combine two techniques to allow both performances to be expressed at the same time.

A first performance refers to a tire which enables a driving operation to be performed without a need to replace the tire in a state that a driver gets off from a vehicle on the shoulder of a road while driving by preventing air leakage by allowing the special polymer material to immediately seal a puncture region when a puncture occurs on a tire tread region by a nail or a sharp alien substance as a special polymer material is applied to an inner liner region inside the tire as a sealant tire.

A second performance refers to a silent tire which reduces sonorant generated when an air layer inside the tire is shaken by vibration generated from the road surface of the tire during driving as the tire has a foam, i.e., a porous material with a plurality of pores mounted on the inside thereof.

As an automobile industry is currently changing rapidly, autonomous vehicles as well as electric cars are undergoing rapid development. Two techniques are essential particularly for cars with this concept. As the electric cars do not have internal combustion engines therein so that engine noises of the cars disappear, the rolling sound or other noises of a tire may become relatively loud in the electric cars.

However, the following problems exist as impediments to achieve these two performances at the same time. Namely, as a general acoustic absorbent is manufactured by foaming material such as polyurethane or the like, a plurality of micropores are densely distributed in the acoustic absorbent. If the acoustic absorbent is attached onto a sealant applied to the tire inner liner, the alien substance may reach an acoustic absorbent layer when an alien substance such as a nail or the like penetrates a tire, sticky properties of the sealant cause micro-fragments of the acoustic absorbent to be separated in a state that the micro-fragments of the acoustic absorbent are adhered to each other when pulling out the nail, these micro-fragments of the acoustic absorbent may function as a factor of impairing the sealing capacity of the sealant, or an acoustic absorbent layer in which micropores are densely formed on the acoustic absorbent layer is physically combined with the top layer of the sealant densely so that the function of the sealant may be deteriorated by deteriorating fluidity of the sealant.

In order to solve these problems, when the acoustic absorbent is disposed at a position where the sealant is not applied instead of a position of the inner liner, or when the acoustic absorbent is wound around a wheel, sound absorption performance of the acoustic absorbent may be remarkably deteriorated, and the acoustic absorbent may cause problems in use as the acoustic absorbent is a hindrance to mounting of the tire even when mounting the tire on the wheel.

In addition, there is a method of increasing the size of cells of the acoustic absorbent to prevent a porous residue from forming air holes without interfering with the flow of the sealant in positioning the acoustic absorbent on the sealant. In this case, although the self-sealing performance of the sealant may be improved considerably in a state that the sealant is stopped, there may be a problem of deteriorating the self-sealing function again while the sealant is being flown into spaces between large cells of the acoustic absorbent by centrifugal force generated on the tire during driving as the size of the cells is increased.

Accordingly, a tire according to the present disclosure comprises an acoustic absorbent layer adhered to the inner surface of the tire, a sealant layer disposed between the inner surface of the tire and the acoustic absorbent layer, and a film layer positioned between the acoustic absorbent layer and the sealant layer.

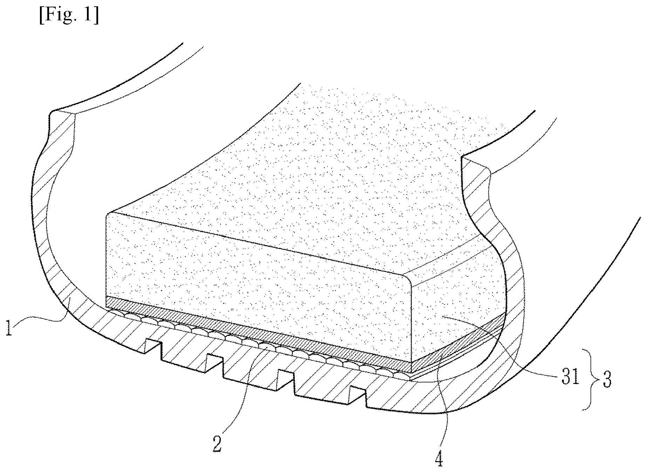

FIG. 1 is a cut perspective view of a pneumatic tire according to an embodiment of the present disclosure.

Referring to FIG. 1, a tire 1 according to the present disclosure comprises an acoustic absorbent layer 3 positioned inside the tire 1, a sealant layer 2 positioned between the inner surface of the tire 1 and the acoustic absorbent layer 3, and applied to the inner surface of the tire 1, and a film layer 4 positioned between the acoustic absorbent layer 3 and the sealant layer 2.

The sealant layer 2 is applied to the inner surface of the tire 1, and, when the tire 1 comprises an inner liner therein, the sealant layer 2 may be generally positioned on the inner liner. With regard to layers positioned on the inner surface of the tire 1 in the specification of the present disclosure, if a second layer is positioned above a first layer, the first layer means to be positioned closer to the inner surface of the tire 1 than the second layer, and the second layer means to be positioned on the other face opposite to one face facing the inner surface of the tire 1 of the first layer.

The sealant layer 2 may be applied to a partial surface or the entire surface of the inner surface of the tire 1, and may be preferably applied to only the inner surface corresponding to contact patch of the tire 1. This is because a part of the tire 1 that is mainly penetrated by alien substances is the contact patch of the tire 1. Accordingly, the width of the sealant layer 2 may be 100 to 120 length% with respect to the width of the tread part of the tire 1.

Furthermore, the sealant layer 2 may have a thickness of 2 to 8 mm. When the thickness of the sealant layer 2 is within the range, the sealant layer 2 may surely perform a self-sealing process with respect to a puncture occurred by a nail or a protrusion without affecting the flow characteristics of the sealant.

The sealant layer 2 may be produced by performing a crosslinking-reaction process of a sealant composition comprising a rubber component or even without performing the crosslinking-reaction process of a sealant composition comprising a crosslinked rubber component. The sealant composition may include an ordinary rubber composition used in sealing a puncture of the tire 1 without limiting compositions with adhesive properties.

However, for example, the sealant composition may include a sealant composition comprising a butyl-based rubber as a main component, and may additionally include a sealant composition comprising a natural rubber-based compound, a silicone-based compound, a urethane-based compound, a styrene-based compound, or an ethylene-based compound.

The butyl-based rubber may include a halogenated butyl rubber (X-IIR) such as a butyl rubber (IIR), a brominated butyl rubber (Br-IIR), or a chlorinated butyl rubber (Cl-IIR), and the like.

Furthermore, the sealant composition may further comprise a diene-based rubber such as natural rubber (NR), isoprene rubber (IR), butadiene rubber (BR), styrenebutadiene rubber (SBR), styrene-isoprene-butadiene rubber (SIBR), ethylene propylene diene rubber (EPDM), chloroprene rubber (CR), acrylonitrile butadiene rubber (NBR), or the like as a rubber component. However, it is preferable in terms of fluidity, etc. that the butyl-based rubber is contained in an amount of 90 wt% or more with respect to 100 wt% of the rubber component.

The sealant composition may further comprise polyisobutylene, and the polyisobutylene may have a weight average molecular weight of 1,000 to 10,000 g/mol. In addition, the polyisoprene may be contained in an amount of 100 to 500 parts by weight with respect to 100 parts by weight of the rubber component. Flowability of material may be deteriorated if the polyisoprene is contained in an amount of less than 100 parts by weight, and shape stability of the material may be deteriorated if the polyisoprene is contained in an amount of more than 500 parts by weight.

Meanwhile, the sealant composition may further comprise a liquid polymer. The liquid polymer may be liquid polybutene, liquid polyisobutene, liquid polyisoprene, liquid polybutadiene, liquid poly α-olefin, liquid isobutylene, liquid ethylene α-olefin copolymer, liquid ethylene propylene copolymer, liquid ethylene butylene copolymer, etc. The liquid polymer may be contained in an amount of 50 to 1,000 parts by weight, more specifically 150 to 500 parts by weight, with respect to 100 parts by weight of the rubber component. Flowability of material may be deteriorated if the liquid polymer is contained in an amount of less than 50 parts by weight, and shape stability of the material may be deteriorated if the liquid polymer is contained in an amount of more than 1,000 parts by weight.

The sealant composition may further comprise an inorganic additive. The inorganic additive, which is for adjusting reinforcing properties of the sealant composition, may be selected from the group consisting of carbon black, silica, calcium carbonate, calcium silicate, magnesium oxide, aluminum oxide, barium sulfate, talc, mica, and mixtures thereof. At this time, the inorganic additive may be contained in an amount of 10 to 100 parts by weight, preferably 30 to 60 parts by weight, with respect to 100 parts by weight of the rubber component.

Moreover, the sealant composition may further comprise additives selected from the group consisting of a vulcanizing agent, a vulcanization accelerator, a vulcanization acceleration aid, an adhesive, and mixtures thereof.

The vulcanizing agent which helps crosslinking of the sealant composition may be contained in an amount of 1 to 20 parts by weight, preferably 5 to 10 parts by weight, with respect to 100 parts by weight of the rubber component.

The vulcanizing agent may include a sulfur-based vulcanizing agent, an organic peroxide, bismaleimides, benzoquinone derivatives, a phenolic vulcanizing agent, and metal oxides such as magnesium oxide and the like. The sulfur-based vulcanizing agent may include an inorganic vulcanizing agent such as a sulfur (S) powder, an insoluble sulfur (S), a precipitated sulfur (S), a colloidal sulfur, or the like.

The vulcanization accelerator for accelerating vulcanization may include any one selected from the group consisting of a sulfenamide-based vulcanization accelerator, a thiazole-based vulcanization accelerator, a thiuram-based vulcanization accelerator, a thiourea-based vulcanization accelerator, a guanidine-based vulcanization accelerator, a dithiocarbamate-based vulcanization accelerator, an aldehyde amine-based vulcanization accelerator, and an aldehyde ammonia-based vulcanization accelerator, an imidazoline-based vulcanization accelerator, a xanthate-based vulcanization accelerator, and combinations thereof. At this time, the vulcanization accelerator may be contained in an amount of 0 to 10 parts by weight, preferably 3 to 5 parts by weight, with respect to 100 parts by weight of the rubber component.

As the vulcanization acceleration aid that is a compounding agent which is used in combination with the vulcanization accelerator to make an acceleration effect of the vulcanization accelerator perfect, zinc oxide and stearic acid may be used together. When zinc oxide and stearic acid are used together, zinc oxide and stearic acid may be used in amounts of 1 to 5 parts by weight and 0.5 to 3 parts by weight, respectively, with respect to 100 parts by weight of the rubber component to serve as a suitable vulcanization acceleration aid.

Furthermore, an adhesive for improving adhesive strength of the sealant composition may include a natural resin-based adhesive such as a phenolic resin, a rosin-based resin, or a terpene-based resin, and a synthetic resin-based adhesive such as a petroleum resin, coal tar, an alkyl phenol-based resin, or the like. At this time, the adhesive may be contained in an amount of 0 to 10 parts by weight, preferably 3 to 5 parts by weight, with respect to 100 parts by weight of the rubber component.

Meanwhile, the acoustic absorbent layer 3 is for reducing resonance noise generated in the internal space of the tire 1, and the acoustic absorbent layer 3 may be formed in a sheet form which is extended in the circumferential direction of the tire 1. That is, the acoustic absorbent layer 3 may be extended along the circumferential direction of the tire 1 in a sheet form, and both ends of the acoustic absorbent layer 3 may meet each other and form a ring as shown in the tire 1.

In addition, the acoustic absorbent layer 3 may have a thickness of 20 to 60 mm, more specifically 30 to 60 mm, and may have a breadth (width) of 10 to 120% with respect to the breadth of a tread part of the tire 1. The noise reduction performance may be deteriorated when the acoustic absorbent layer 3 has a thickness of less than 35 mm, and the acoustic absorbent may be worn out by the friction with the surface of a rim facing the acoustic absorbent inside the tire 1 during driving when the acoustic absorbent layer 3 has a thickness of more than 60 mm.

The acoustic absorbent layer 3 comprises a first porous material 31 with an average pore size of 1,200 to 2,400 *µ*m.

Namely, the average pore size of the first porous material 31 is large compared to an average pore size of an existing porous material used as the acoustic absorbent. Accordingly, the first porous material 31 may improve flowability of the sealant by reducing a specific surface area between the sealant layer 2 and the acoustic absorbent layer 3, and not only may prevent micro-fragments of the first porous material 31 from deteriorating the function of the sealant, but also may maintain the noise reduction performance by reducing a specific surface area of the first porous material 31 adhered to the surface of the nail even when an alien substance such as a nail or the like reaches the acoustic absorbent layer 3 by penetrating the tire 1 and the sealant layer 2.

Flowability of the sealant that is in contact with the surface of the first porous material 31 may be deteriorated when the first porous material 31 has an average pore size of less than 1,200 *µ*m, and durability of the acoustic absorbent may be deteriorated during driving when the first porous material 31 has an average pore size of more than 2,400 *µ*m.

The porous material may be any one selected from the group consisting of a porous nonwoven fabric, a porous foam, and a laminate thereof.

Specifically, the porous nonwoven fabric may be a polyester-based nonwoven fabric or a polystyrene-based nonwoven fabric, and the porous foam may include a synthetic resin foam including an ether-based polyurethane foam that is a polyurethane foam using polyether polyol as a raw material, an ester-based polyurethane foam that is a polyurethane foam using polyester polyol as a raw material, an ether/ester-based polyurethane foam that is a polyurethane foam using polyester polyether polyol as a raw material, a polyethylene foam, etc., and a rubber foam including an ethylene propylene rubber foam (EDPM foam), a nitrile rubber foam (NBR foam), etc.

Generally, the polyurethane foam may be manufactured by urethane reacting a polyisocyanate compound and a polyol (polyhydroxy compound).

The acoustic absorbent layer 3 may further comprise a second porous material 32 stacked on the first porous material 31.

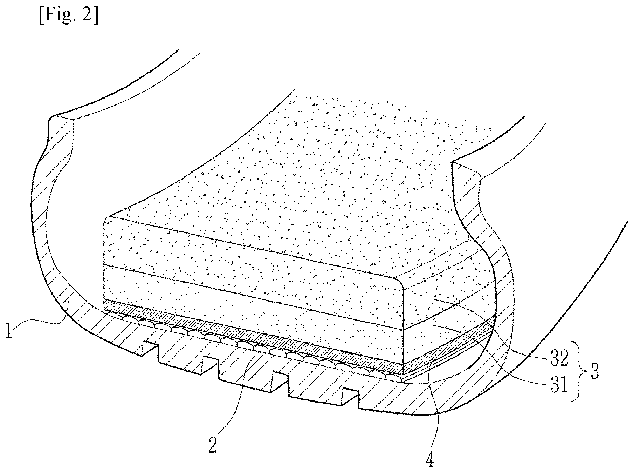

FIG. 2, as a cut perspective view of a pneumatic tire according to the other embodiment of the present disclosure, illustrates a case of further comprising the second porous material 32.

Referring to FIG. 2, one face of the first porous material 31 is adhered to the inner surface of the tire 1 by the sealant layer 2, and the second porous material 32 is stacked on the other face of the first porous material 31.

The second porous material 32 may have an average pore size of 100 to 1,200 *µ*m, more specifically 300 to 1,000 *µ*m.

Namely, the average pore size of the second porous material 32 is smaller than that of the first porous material 31. Accordingly, the first porous material 31 may contribute to noise reduction while minimizing interfering with fluidity of the sealant layer 2 as the first porous material 31 has a relatively large average pore size compared to the second porous material 32, and the second porous material 32 may have a larger noise reduction performance than the first porous material 31 as the second porous material 32 has a relatively small average pore size compared to the first porous material 31.

At this time, thickness of the first porous material 31 may be 10 to 100 length%, more specifically 30 to 90 length% of the total thickness of the acoustic absorbent layer 3. The self-sealing performance may be deteriorated since micro-fragments of the acoustic absorbent are drawn by the nail when the nail is pulled out as a penetrated nail touches the second porous material 32 when the thickness of the first porous material 31 is less than 10 length% of the total thickness of the acoustic absorbent layer 3, and the noise reduction performance may be deteriorated when the thickness of the first porous material 31 is more than 100 length% of the total thickness of the acoustic absorbent layer 3 compared to when the thickness of the first porous material 31 is not more than 100 length% of the total thickness of the acoustic absorbent layer 3.

Furthermore, the first porous material 31 may have a density of 25 to 40 kg/m³, a hardness of 10 to 20 kgf, a tensile strength of 0.8 kgf/cm² or more, and an elongation of 70% or more.

Durability may be deteriorated when the first porous material 31 has a density of less than 25 kg/m³, and the tire performance may be affected as the weight of the acoustic absorbent is increased when the first porous material 31 may have a density of more than 40 kg/m³. Processability may be deteriorated when the first porous material 31 has a hardness of less than 10 kgf or more than 20 kgf. The durability may be deteriorated when the first porous material 31 has a tensile strength of less than 0.8 kgf/cm², and the durability may be deteriorated when the first porous material 31 has an elongation of less than 70%.

The second porous material 32 may have a density of 20 to 40 kg/m³, a hardness of 10 to 20 kgf, a tensile strength of 0.8 kgf/cm² or more, and an elongation of 70% or more.

Durability may be deteriorated when the second porous material 32 has a density of less than 20 kg/m³, and the tire performance may be affected as the weight of the acoustic absorbent is increased when the second porous material 32 may have a density of more than 40 kg/m³. Processability may be deteriorated when the second porous material 32 has a hardness of less than 10 kgf or more than 20 kgf. The durability may be deteriorated when the second porous material 32 has a tensile strength of less than 0.8 kgf/cm², and the durability may be deteriorated when the second porous material 32 has an elongation of less than 70%.

The first porous material 31 and the second porous material 32 may be adhered by various methods. For example, the second porous material 32 may be adhered onto the first porous material 31 by an adhesive, a double-sided adhesive tape, or the like.

The repetitive explanation is omitted as the description of material of the second porous material 32 is the same as that of the first porous material 31 except that an average pore size or density of the second porous material 32 is different from that of the first porous material 31.

Meanwhile, the tire 1 may further comprise a film layer 4 between the acoustic absorbent layer 3 and the sealant layer 2. The film layer 4 may prevent sound absorption performance of the acoustic absorbent layer 3 from being deteriorated by separating the acoustic absorbent layer 3 and the sealant layer 2, thereby permeating a sealant into pores of the acoustic absorbent layer 3 so that the sealant blocks the pores thereof, and may prevent micro-fragments of the porous materials from being mixed into the sealant to impair the sealing capability of the sealant layer 2.

For this purpose, the film layer 4 may be formed of urethane, specifically thermoplastic polyurethane. The film layer 4 is desirably formed of thermoplastic polyurethane in that flowability of the sealant is improved when the film layer 4 is formed of thermoplastic polyurethane.

The film layer 4 may have a thickness of 0.01 to 5 mm, specifically 0.02 to 0.05 mm. There may be a problem that the effect of a film is not displayed as the sealant penetrates the film layer when the film layer 4 has a thickness of less than 0.01 mm, and there may be problems of increasing the price of subsidiary materials and increasing the weight inside a tire, thereby deteriorating rolling resistance (RRc) performance when the film layer 4 has a thickness of more than 5 mm.

Accordingly, after forming the acoustic absorbent layer 3 into two layers, the present disclosure maintains noise performance by applying a porous material with the same pore size as an existing porous material to an upper layer facing the outside of the tire, and improves flowability of the sealant layer 2 by increasing pores of the porous material in a lower layer brought into contact with the sealant layer 2, thereby reducing a specific surface area between the sealant layer 2 and the acoustic absorbent layer 3. Due to this, micro-fragments of the porous material may not deteriorate the function of the sealant layer 2 as a specific surface area of the acoustic absorbent layer 3 adhered to the surface of the nail is reduced even when a nail reaches the acoustic absorbent layer 3 by penetrating the tire 1 and the sealant layer 2.

However, if a porous material with large pores compared to the existing porous material is positioned in the lower layer brought into contact with the sealant layer 2, a sealant material is flown into spaces between the pores of the porous material, and the sealant material is eventually impregnated into the pores of the porous material by centrifugal force and compression or release of the porous material generated during driving of the tire. In conclusion, this hinders the flowability of the sealant layer 2, and does not enable the sealant material to seal the puncture region.

Therefore, the present disclosure implements techniques which prevent the sealant material from flowing into between pores of the acoustic absorbent layer 3 during driving of the tire 1 by coating a thin film layer 4 on the acoustic absorbent layer 3 brought into contact with the sealant layer 2 while positioning the acoustic absorbent layer 3 on the lower layer of the sealant layer 2 by the same method as an existing method, improve flowability of the sealant layer 2 accordingly, and maintain the function of an existing sealant layer 2 although a nail reaches the acoustic absorbent layer 3 by penetrating the tire 1, the sealant layer 2, and the film layer 4.

Hereinafter, Examples of the present disclosure will be described in detail so that the present disclosure can be easily practiced by those skilled in the art to which the present disclosure pertains. However, the present disclosure can be implemented in various different forms and is not limited to the Examples described herein.

### [Manufacturing Example: Manufacturing of Tires]

A first porous material and a second porous material having physical properties as shown in the following Table 1 were prepared.

**[Table 1]**

| | Unit | Second porous material | First porous material |
|---|---|---|---|
| Density | Kg/m³ | 28.8 | 29.5 |
| Hardness (ILD25%) | kgf | 12.46 | 17.7 |
| Tensile strength | Kgf/cm² | 1.31 | 0.96 |
| Elongation | % | 248.5 | 83.29 |
| Average pore size | *µ*m | 750 | 1850 |

- Hardness: JIS K6400-2
- Tensile strength, elongation: JIS K6400-5
- Density: JIS K7222

Furthermore, a sealant composition was prepared by mixing 100 parts by weight of butyl rubber, 400 parts by weight of polyisobutylene, 40 parts by weight of a carbon black additive, and 2 parts by weight of a sulfur-based vulcanizing agent, and tires were manufactured by adhering porous materials as shown in the flowing Table 2 to the sealant composition applied to the inner surface of the tire of 195/65R15 standard after applying the sealant composition to the inner surface of a tire of 195/65R15 standard.

In the Table 2 below, Comparative Example 1 is a case in which an acoustic absorbent layer is not included, Reference Example 1 is a case in which the acoustic absorbent layer is formed by adhering a TPU film with a thickness of 0.04 mm to a sealant layer, and then adhering the second porous material to the TPU film adhered to the sealant layer by using an adhesive, Reference Example 2 is a case in which the acoustic absorbent layer is formed by adhering the first porous material to the sealant layer, and then adhering and laminating the second porous material onto the first porous material by using the adhesive, and Example 1 is a case in which the acoustic absorbent layer is formed by adhering the TPU film with the thickness of 0.04 mm to the sealant layer, and then adhering the first and second porous materials to the TPU film adhered to the sealant layer by using the adhesive.

At this time, total thicknesses of the acoustic absorbent layers of Reference Examples and Example are equal.

**[Table 2]**

| | Film layer (thickness) | First porous material (thickness) | Second porous material (thickness) | Total acoustic absorbent layer (thickness) |
|---|---|---|---|---|
| Comparative Example 1 | - | - | - | - |
| Reference Example 1 | 0.04 mm | - | 35 mm | 35 mm |
| Reference Example 2 | - | 25 mm | 10 mm | 35 mm |
| Example 1 | 0.04 mm | 25 mm | 10 mm | 35 mm |

### [Experimental Example: Measuring Performances of Tires]

After conducting a sealing effect, a high-speed durability test, and an adhesion durability test with respect to the manufactured tires, test results are shown in the following Table 3.

**[Table 3]**

| Classification | Conditions | Comparative Example 1 | Reference Example 1 | Reference Example 2 | Example 1 |
|---|---|---|---|---|---|
| Sealing effect | Room temperature | 100 % | 100 % | 70 % | 100 % |
| | -30 °C (low temperature) | 100 % | 85 % | 60 % | 90 % |
| | 60 °C (high temperature) | 100 % | 95 % | 80 % | 95 % |
| Noise (dB) | | 1.386 | 0.568 | 0.621 | 0.546 |
| | | 100% | 41% | 44% | 39% |
| High-speed durability test | | Adhesion maintenance | Adhesion maintenance | Adhesion maintenance | Adhesion maintenance |
| Adhesion durability test | | Adhesion maintenance | Adhesion maintenance | Adhesion maintenance | Adhesion maintenance |

- Noise test: Sonorants inside the tires were measured through changes in force sizes in a vertical direction from a tire/wheel central axis while passing through a cleat at predetermined intervals by using cleat impact test equipment (cleat impact test equipment: a testing machine measuring vibration responses and vibration attenuations of an axle or a suspension when a tire or an assembly of the tire and the suspension receives an impact of the cleat).
- Sealing effect: In order to check the self-sealing performance of the tires, a total 30 nails including 10 small-sized nails with a body diameter of 2.5 mm, 10 medium-sized nails with a body diameter of 3.4 mm, and 10 large-sized nails with a body diameter of 5.0 mm which had been specially manufactured were driven into tread regions in which the sealant had been applied to the inside of the tires. After leaving the nails driven into the tires at room temperature, or storing the nails driven into the tires in a high temperature chamber or a low temperature chamber for 12 hours depending on conditions, taking out the stored tires, and removing the nails from the tires, sealing was checked by spraying soapy water onto the nail-removed tires. The sealing effect was displayed as 100% when there was not an air leakage as air pressures of the tires were the same as the initial air pressure.
- High-speed and adhesion durability tests: After conducting the high-speed and adhesion durability tests for 34 hours by performing 100 km/h decelerating and accelerating processes at 240 km/h high speed driving and a predetermined repetition cycle, whether adhesiveness and shape of the acoustic absorbent layer were maintained or not were measured with the naked eye.

Referring to Table 3, sealing effects were all improved at room temperature, low temperatures, and high temperatures, and noise reduction effects were also excellent in case of Example 1 compared to Comparative Example and Reference Examples.

Hereinabove, exemplary embodiments of the present disclosure have been described in detail. However, the scope of the present disclosure is not limited thereto, but various changes or modified forms of those skilled in the art using a basic concept of the present disclosure defined in the following claims also fall within the scope of the present disclosure.

### [Explanation of reference numerals and symbols]

1: Tire
2: Sealant layer
3: Acoustic absorbent layer
31: First porous material
32: Second porous material
4: Film layer

## Claims

1. A tire comprising:
an acoustic absorbent layer positioned inside the tire;
a sealant layer positioned between the inner surface of the tire and the acoustic absorbent layer, and applied to the inner surface of the tire; and
a film layer positioned between the acoustic absorbent layer and the sealant layer,
wherein the acoustic absorbent layer comprises a first porous material with an average pore size of 1,200 to 2,400 *µ*m.

2. The tire of claim 1, wherein the acoustic absorbent layer further comprises a second porous material stacked on the first porous material, one face of the first porous material is adhered to the inner surface of the tire by the sealant layer, and the second porous material is stacked on the other face of the first porous material.

3. The tire of claim 2, wherein the second porous material has an average pore size of 100 to 1,200 *µ*m.

4. The tire of claim 2, wherein the first porous material has a density of 25 to 40 kg/m³, a hardness of 10 to 20 kgf, a tensile strength of 0.8 kgf/cm² or more, and an elongation of 70% or more, and the second porous material has a density of 20 to 40 kg/m³, a hardness of 10 to 20 kgf, a tensile strength of 0.8 kgf/cm² or more, and an elongation of 70% or more.

5. The tire of claim 2, wherein the acoustic absorbent layer has a thickness of 20 to 60 mm, and the first porous material has a thickness corresponding to 30 to 90 length% of the total thickness of the acoustic absorbent layer.

6. The tire of claim 1, wherein the film layer comprises polyurethane (PU) or thermoplastic polyurethane (TPU).

7. The tire of claim 1, wherein the film layer has a thickness of 0.01 to 5 mm.
